(19) Europäisches Patentamt

European Patent Office

Office européen des brevets

(11) **EP 4 610 633 A1**

(12) **EUROPEAN PATENT APPLICATION**

(43) Date of publication:
03.09.2025 Bulletin 2025/36

(21) Application number: 25158472.8

(22) Date of filing: 18.02.2025

(51) International Patent Classification (IPC):
*G01N 21/88* (2006.01)   *G01N 21/84* (2006.01)
*G01N 21/95* (2006.01)   *G01N 21/94* (2006.01)

(52) Cooperative Patent Classification (CPC):
**G01N 21/8806; G01N 21/8422; G01N 21/9515;**
G01N 21/94; G01N 2021/8427; G01N 2021/845;
G01N 2021/8816; G01N 2021/8845;
G01N 2021/8854

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 28.02.2024 JP 2024028126

(71) Applicant: **Ricoh Company, Ltd.**
**Tokyo 143-8555 (JP)**

(72) Inventor: **MASUDA, Koji**
**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54) **MEASURING APPARATUS AND MEASURING METHOD**

(57) A measuring apparatus (1) includes an illuminator (11) and a light receiver (12). The illuminator (11) includes a light source (13) to emit a light beam to an object conveyed in a conveyance direction; and a diffuser plate (14) to diffuse the light beam emitted from the light source (13) to illuminate a surface of the object with a diffused light beam. The light receiver (12) receives reflection light specularly reflected from the surface of the object illuminated by the illuminator (11). A conditional expression below is satisfied:

$$L1 > L2$$

where
L1 denotes a distance between the light source (13) and the diffuser plate (14), and
L2 denotes a distance between the diffuser plate (14) and the surface of the object.

**EP 4 610 633 A1**

# FIG. 1

1

20

CONTROL-
LER

30

RESULT
OUTPUT
UNIT

OPTICAL
SECTION

10

ENCODER    READER    POSITION
SENSOR

21    22    23

CONVEYANCE
DIRECTION

3

2(2P)

**Description**

BACKGROUND

Technical Field

The present disclosure relates to a measuring apparatus and a measuring method.

Related Art

An inspection device that inspects a car paint surface for defects is known. For example, Japanese Unexamined Patent Application Publication No. 2021-056182 discloses an apparatus that acquires multiple images of a measurement site on a workpiece, which is an object for defect detection, while relatively moving brightness and darkness patterns created by an illuminator, and detects defects.

However, since the painted surface of a vehicle body, for example, as an object for measurement includes multiple regions with different normal directions and curvatures, achieving higher accuracy in measurement has been a challenge.

To address this challenge, the present disclosure aims to provide a measuring apparatus that enables highly accurate measurement.

SUMMARY

One or more embodiments of the present disclosure provides A measuring apparatus including an illuminator; and a light receive. The illuminator includes a light source to emit a light beam to an object conveyed in a conveyance direction; and a diffuser plate to diffuse the light beam emitted from the light source to illuminate a surface of the object with a diffused light beam. The light receiver receives reflection light specularly reflected from the surface of the object illuminated by the illuminator. A conditional expression below is satisfied:

$$L1 > L2$$

where

L1 denotes a distance between the light source and the diffuser plate, and
L2 denotes a distance between the diffuser plate and the surface of the object.

According to one or more aspects of the present disclosure, highly accurate measurement can be achieved.

Further scope of applicability of the present invention will become apparent from the detailed description given hereinafter. However, the detailed description and specific examples, while indicating preferred embodiments of the invention, are given by illustration only, since various changes and modifications within the spirit and scope of the invention will become apparent to those skilled in the art from this detailed description.

BRIEF DESCRIPTION OF THE DRAWINGS

A more complete appreciation of one or more embodiments of the present disclosure and many of the attendant advantages and features thereof can be readily obtained and understood from the following detailed description with reference to the accompanying drawings, wherein:

FIG. 1 is a diagram of a measuring apparatus;
FIG. 2 is a diagram of an optical section included in a measurement apparatus;
FIG. 3 is a block diagram of a hardware configuration of a controller of a measuring apparatus;
FIG. 4 is a block diagram of a functional configuration of a controller of a measuring apparatus;
FIGS. 5A and 5B are diagrams each illustrating the relation between an optical section of a measuring apparatus and an object to be measured;
FIGS. 6A, 6B, and 6C are diagrams each illustrating an optical arrangement in a measuring apparatus according to Comparative Example;
FIGS. 7A and 7B are diagrams each illustrating an optical arrangement of a measuring apparatus;
FIG. 8 is a plan view of an optical arrangement of a measuring apparatus; and
FIG. 9 is a flowchart for explaining a measuring method.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments for implementing the disclosure are described below referring to the drawings. Like reference signs are applied to identical or corresponding components throughout the drawings and redundant description may be omitted.

Configuration of Measuring Apparatus 1

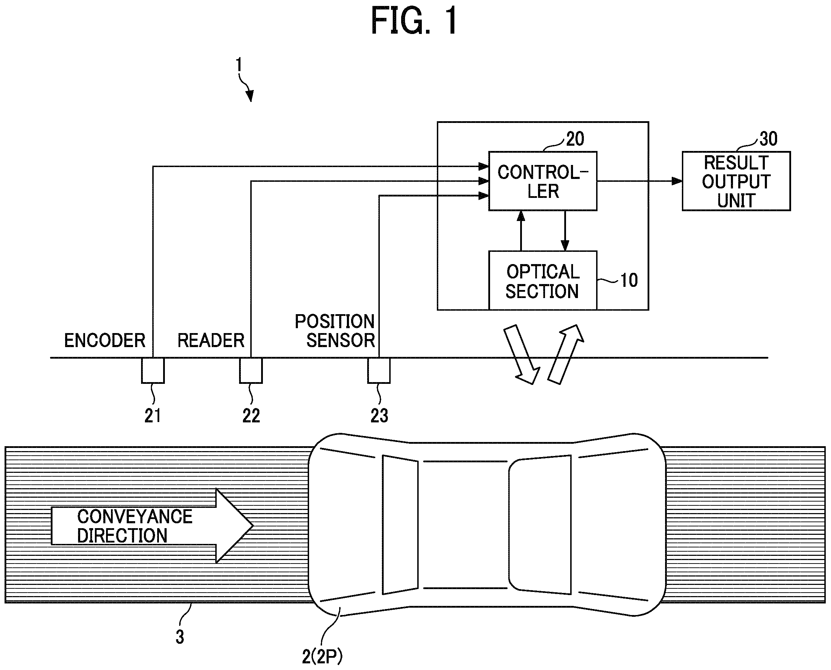

FIG. 1 is a diagram illustrating the configuration of the measuring apparatus 1. The measuring apparatus 1 measures the state of a surface 2P of an object 2 to be measured, which is being conveyed in a conveyance direction. The measurement apparatus 1 measures the object 2, to detect a defect in the surface 2P of the object 2. The object 2 is conveyed by a conveyor 3. The object 2 is, for example, a painted vehicle body such as a large vehicle, a passenger car, or a compact car, but is not limited thereto. The object 2 can be any painted object, and the measuring apparatus measures the object 2 and the one or more characteristics values based on a captured image (e.g., by a camera) of the object 2. The vehicle body is, for example, the surface 2P of the vehicle body, and the surface 2P of the vehicle body may be painted. The object 2 may be an object other than a vehicle body, and the surface 2P of the object 2 may not be coated.

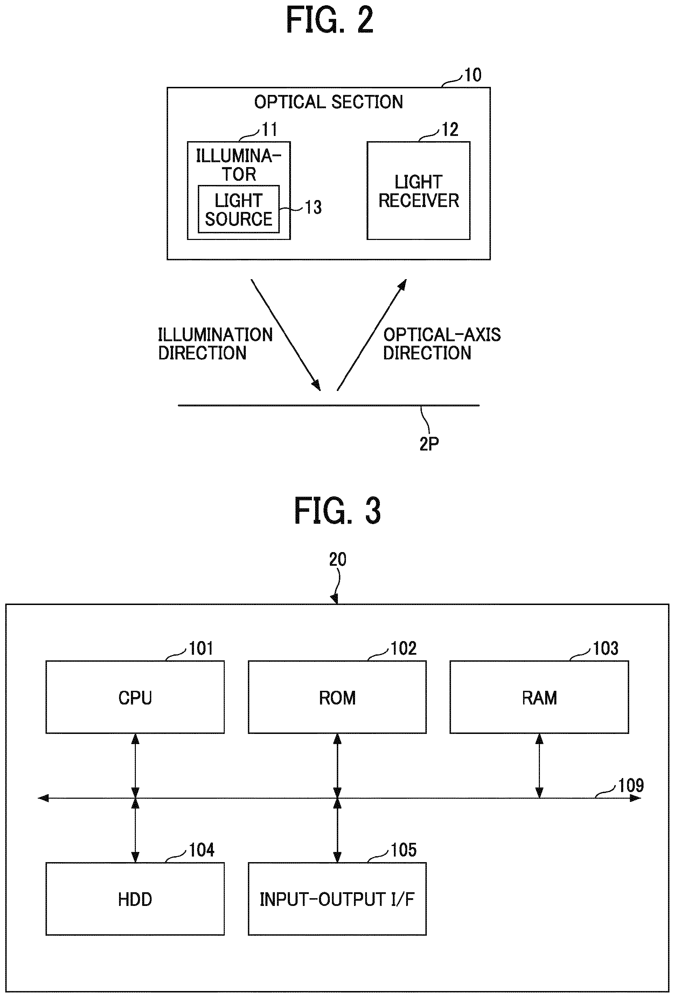

The measuring apparatus 1 includes at least an optical section 10. The optical section 10 will be described in detail with reference to FIG. 2. FIG. 2 is a diagram of the optical section 10 according to one or more embodiments of the present disclosure. The optical section 10 includes an illuminator 11 and a light receiver 12. A component including the illuminator 11 and the light receiver 12 is referred to as the optical section 10.

The optical section 10 illuminates the object 2 and receives reflection light specularly reflected from the illuminated object 2. The surface 2P can form a gentle curved shape (i.e., a curved shape with a large radius of curvature), however, the present application is not limited thereto. Thus, the surface 2P is described as an imaginary plane parallel to the conveyance direction.

The illuminator 11 illuminates the object 2. The light receiver 12 receives reflection light specularly reflected from the object 2, which is illuminated by the illuminator 11. Examples of the light receiver 12 include an image-capturing device such as a camera including an imaging element, such as a charge coupled device (CCD) or a complementary metal-oxide-semiconductor (CMOS), a quantum dot sensor, an organic image sensor, etc., but is not limited thereto.

When the light receiver 12 is an imaging device, the image information of the object 2 is generated or obtained. When light receiver 12 is a visible light camera, the visible light camera acquires color image information. In one example, the light receiver 12 may use an infrared camera as an imaging device, or may acquire monochrome image information. The light receiver 12 may be configured by an area camera including an optical lens.

The surface 2P of the object 2 may be a smooth, glossy surface. In this configuration, the light incident on the surface 2P from the illuminator 11 is specularly reflected because the incident angle equals the reflection angle. Further, the surface 2P is a set of multiple of curved surface regions having different normal directions and curvatures.

The measuring apparatus 1 further includes a controller 20, a result output unit 30, an encoder 21, a reader 22, and a position sensor 23. The controller 20 controls, for example, the timing of the operation of the measuring apparatus 1. The encoder 21, the reader 22, and the position sensor 23 are connected to the controller 20.

The encoder 21 monitors the conveyance state of the conveyor 3, such as its conveyance speed. The reader 22 acquires information of the object 2, such as its unique identification (ID), vehicle model, and color. The position sensor 23 acquires position information of the object 2, such as its approach to the measurement area or its presence in the measurement area. The controller 20 detects any defect on the surface of the object 2 based on the light specularly reflected from the object, received by the light receiver 12.

The result output unit 30 outputs information on the characteristic values and defects at the respective measurement positions of the object 2 in formats such as a monitor display, printed documents, or electronic data.

The measuring apparatus 1 provides information useful for identifying the cause of the defect in the preceding process and for repairing the defect in the subsequent process, based on the determined defect type.

When the object 2 is a painted vehicle body, the measuring apparatus 1 measures the presence of defects in painted surfaces of parts such as the door, bonnet, roof, trunk lid, or rear bumper of the vehicle body. The defects in the painted surfaces refer to scratches, cracks, unevenness, dirt, or discoloration on the coated surface. The coating defects include dust particles, fisheyes, pinholes, and orange peel.

In FIG. 1, the measuring apparatus 1 is placed only on one side of the conveyor 3. This is not a limitation. In some embodiments, the measuring apparatus 1 is placed on each side of the conveyor 3. When the measuring apparatus 1 is placed on each side of the transport unit 3, the object 2 may be placed between the measuring apparatuses 1. Alternatively, the measuring apparatuses 1 may be arranged offset from each other in the conveyance direction, with the object 2 positioned between the measuring apparatuses 1.

FIG. 3 is a block diagram of a hardware configuration of a controller 20 of a measuring apparatus 1. The controller 20 includes a central processing unit (CPU) 101, a read only memory (ROM) 102, a random access memory (RAM) 103, a hard disk drive (HDD) 104, and an input-output interface (I/F) 105. These components are electrically connected to one another via a bus 109.

The CPU 101 controls the operation of the controller 20. The ROM 102 stores a program executed in the CPU 101. The RAM 103 is used as a work area in which the CPU 101 executes a program. The HDD 104 stores various kinds of information such as programs. The input-output I/F 105 is an interface for inputting and outputting various signals and date to and from an external device.

Part or all of the functions of the CPU 101 may be implemented by an electronic circuit, such as an application specific integrated circuit (ASIC) or a field-programmable gate array (FPGA).

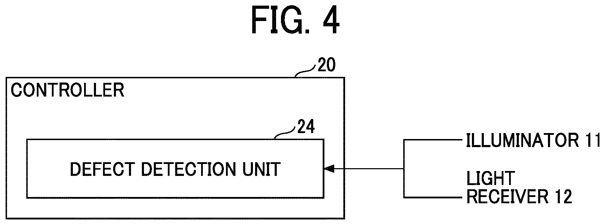

FIG. 4 is a block diagram of a hardware configuration of a controller 20 of a measuring apparatus 1. The controller 20 includes a defect detection unit 24. The controller 20 controls the timing of the operation of the illuminator 11 and the light receiver 12.

The defect detection unit 24 detects any defect on the surface of the object 2 based on the light specularly reflected from the object, received by the light receiver 12. More specifically, the defect detection unit 24 generates image information based on the specular reflection light from the object 2 received by the light receiver 12, calculates a characteristic value based on the generated image information, and detects defects on the object 2 according to the calculated characteristic value. More specifically, the defect detection unit 24 calculates one or more characteristic values based on a predetermined algorithm. The defect detection unit 24 may calculate the characteristic value based on the luminance information, the phase information, the color information, and information obtained by combining these pieces of information.

The defect detection unit 24 evaluates whether the state of the surface 2P is good or not based on the calculated characteristic value and the surface goodness algorithm. When a defect is detected, the defect detection unit 24 detects a defect using a defect inspection algorithm based on the characteristic value, the state of the object 2, and inspection criteria set for each type of defect.

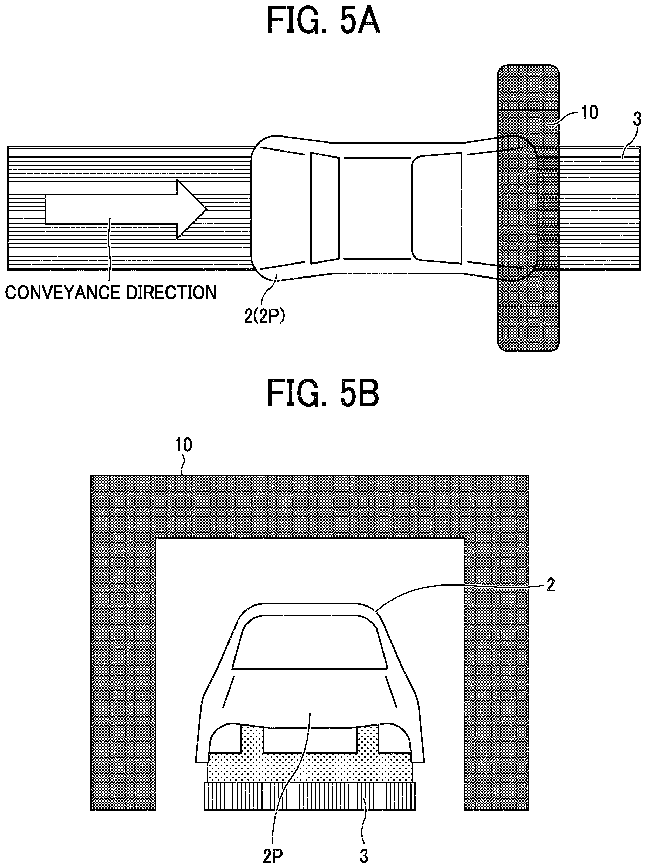

FIGS. 5A and 5B are diagrams each illustrating the relation between an optical section 10 of a measuring apparatus 1 in FIG. 1 and the object 2 to be measured. FIG. 5A is a plan view of the optical section 10. FIG. 5B is a front view of the optical section 10. The object 2 is conveyed in the conveying direction by the conveyor 3. The optical section 10 is arranged in a gate shape (i.e., U-shape) to surround the conveyed object 2 (i.e., to surround the conveyed object 2 on multiple sides, including completely surrounding the object 2 along a transverse plane perpendicular to the conveying direction). The object 2 is conveyed at a constant speed through the gate-shaped optical section 10 for measurement, but is not limited thereto, and the object 2 can be conveyed at a varying speed through the optical section 10. When the object 2 passes through the gate-shaped optical section 10, the entire object 2 is measured.

Consideration Process Leading to the Conception of Measuring Apparatus 1

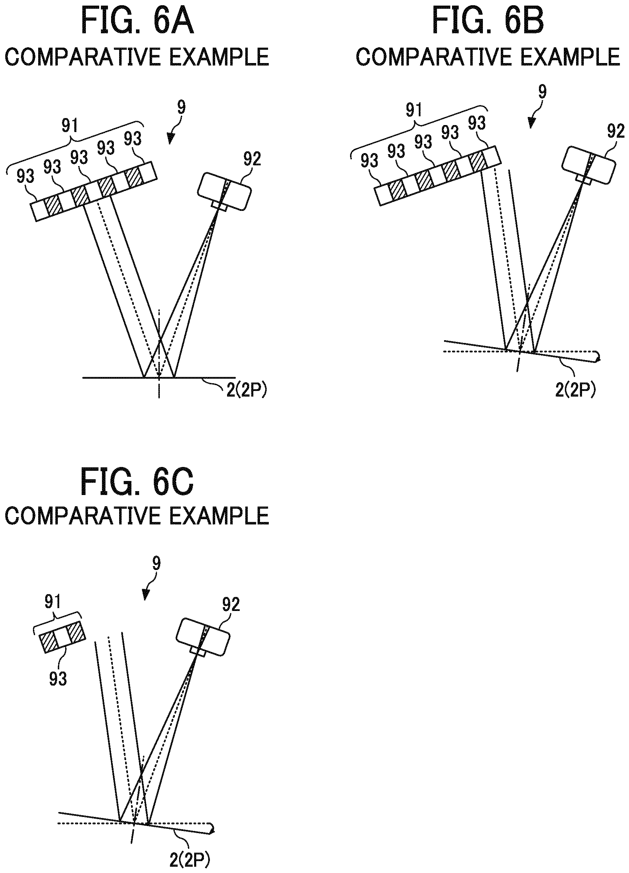

The following describes the consideration process leading to the conception of the measuring apparatus 1 according to one ore more embodiments. FIGS. 6A, 6B, and 6C are diagrams each illustrating an optical arrangement in a measuring apparatus 9 according to Comparative Example.

The measuring apparatus 9 according to Comparative Example includes a light receiver 92 and an illuminator 91. The illuminator 91 emits linear light to an object 2. The light receiver 92 receives light specularly reflected from the object 2 illuminated by the illuminator 91. The illuminator 91 includes multiple light sources 93. The light sources 93 have multiple white-color directional properties to create bright and dark periodic patterns. In this configuration, a stripe pattern is formed on the object 2 illuminated by the illuminator 91. The light receiver 92 includes multiple area cameras and receives light specularly reflected from the illuminated object 2.

FIG. 6A illustrates the measuring apparatus 9, in which five light sources 93 are arranged at equal intervals within the illuminator 91.

The illumination direction from the light source 93 and the optical-axis direction of the light receiver 92 are arranged so that the light is specularly reflected off the object 2. In FIG. 6A, the hatched portions on both sides of each light source 93 indicate the absence of a light source.

FIG. 6B illustrates a measuring apparatus 9 when the surface 2P is tilted relative to the surface 2P in FIG. 6A. Although the positions of the light sources 93 for measuring specularly reflected light are shifted in the array direction, measurement is still possible. FIG. 6C illustrates a measuring apparatus 9 with a reduced number of light sources 9, specifically one light source 93, compared to FIGS. 6A and 6B. FIG. 6C illustrates a measuring apparatus 9 when the surface 2P is tilted, as in FIG. 6B. In FIG. 6C, since the light source 93 is not positioned appropriately for measurement, the light receiver 92 cannot receive the light specularly reflected from the object 2.

The surface 2P includes multiple regions with different normal directions and curvatures, depending on the position of the object 2, such as when the surface 2P is inclined. When the object 2 is measured as in FIGS. 6B and 6C, the light source 93 is not positioned appropriately for measurement, unlike when the surface 2P of the object 2 is not tilted. In this case, the number of light sources 93 used to emit light onto the object 2 is increased.

In view of such circumstances, the measuring apparatus 1 according one or more embodiments has been found. In the following description, the optical arrangement of a measuring apparatus 1 according to one or more embodiments is described.

Optical Arrangement of Measuring Apparatus

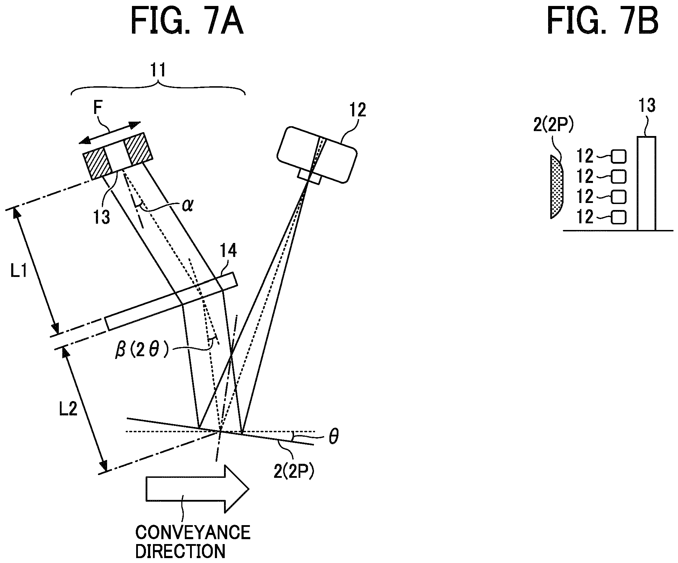

FIGS. 7A and 7B are diagrams each illustrating an optical arrangement of the measuring apparatus 1. FIG. 7A is a plan view of the optical arrangement. FIG. 7B is a front view of the optical arrangement. Like reference signs are applied to components identical or corresponding to components described above, and redundant description is omitted.

As illustrated in FIG. 7A, the measuring apparatus 1 includes an illuminator 11 and a light receiver 12, and the illuminator 11 includes a light source 13 and a diffusion plate 14. The light source 13 emits linear light onto an object 2. In FIG. 7A, the hatched portions on both sides of each light source 13 indicate the absence of a light source. As illustrated in FIG. 7B, the light source 13 has directional properties that are elongated in an orthogonal direction orthogonal to the plane of FIG. 7B. Multiple light receivers 12 are arranged in the orthogonal direction.

The light source 13 may be a single long light source or a combination of multiple short light sources. The illuminator 11 may include one or more light sources 13.

The light source 13 may include one or more light-emitting diode (LED) elements, but is not limited thereto, and a fluorescent lamp or a halogen lamp may be used. The light source preferably emits visible light; however, the light source may emit light in other wavelength bands, such as infrared light.

The diffuser plate 14 diffuses a light beam from the light source. The diffusion plate 14 is positioned between the light source 13 and the object 2, and diffuses the light beam in the array direction F of the light source 13. The diffused light beam illuminates the object 2.

The light receiver 12 receives light specularly reflected from the object 2, which is illuminated by the illuminator 11. In one or more embodiments, the light receiver 12 may focus on the object 2 and receive light reflected from the object 2 at predetermined time intervals or in response to an external trigger signal from the outside. The illumination direction from the light source 13 and the optical-axis direction of the light receiver 12 are arranged so that the light is specularly reflected off the object 2.

A region to be measured by the measuring apparatus 1 is predefined on the object 2. However, the entire object 2 does not have to be within the measurement region. For example, when the object 2 is a vehicle body, portions with large curved surfaces, such as around a door knob or near the edges of the vehicle body, are typically excluded from the measurement region. The illuminator 11 and the light receiver 12 may be arranged according to a measurable region that has been predefined as the measurement region.

A diffusion angle A is a diffusion angle of light emitted from the light source 13 and passing through a plane parallel to the conveyance direction. A diffusion angle B is a diffusion angle of light passing through the diffuser plate 14 in a plane parallel to the conveyance direction. The light beam emitted from the light source 13 is diffused in angular directions wider than the full width at half maximum (FWHM), but its radiation intensity is small. In view of this, the diffusion angle A of the light source 13 and the diffusion angle B of the diffuser plate 14 are defined as full angles at half maximum, where the radiation intensity is half of the peak radiation intensity. This definition of the diffusion angle A and the diffusion angle B ensures that the radiation intensity remains at a level that does not affect the light reception of the light receiver 12 and the detection by the defect detection unit 24.

FIG. 7A illustrates an angle $\alpha$, an angle $\beta$, an angle 0, a distance L1, and a distance L2. The angle $\alpha$ is the angle between the optical axis and the boundary line of the light beam, which corresponds to the full width at half maximum (FWHM), at the diffuser plate 14. The angle $\beta$ is the angle between the optical axis and the boundary line of the light beam, which corresponds to the full width at half maximum (FWHM), at the surface 2P of the object 2. The angle $\alpha$ satisfies $\alpha \leq A$, and the angle $\beta$ satisfies $\beta < B$. The angle $\theta$ is an angle between the surface 2P of the object 2 and the conveyance direction. When $\theta$ denotes the angle between the surface 2P of the object 2 and the conveyance direction, the light beam emitted from the light source 13 at an angle $\alpha$ ($\alpha < A$) and diffused at an angle $\beta$ ($\beta < B$) in the direction of $2\theta$ from the diffuser plate 14 is received by the light receiver 12 through a specular reflection path.

When $\theta$max is assumed as the maximum value of the angle between the surface 2P of the object 2 and the conveyance direction within the measurement region, the diffusion angle B of the diffuser plate 14 and the angle $\theta$max satisfy B $\geq$ 2 $\theta$max. In this case, $\theta$max ranges from approximately 15 to 25 degrees, depending on the type of the object 2.

The length L1 indicates the distance between the light source 13 and the diffuser plate 14. The length L2 indicates the distance between the diffuser plate 14 and the object 2. When $\theta$ is an angle between the surface 2P of the object 2 and the conveyance direction, the following conditional expression (1) is satisfied to achieve the reception of light specularly reflected from the object 2.

$$L1 \times \alpha \approx L2 \times \beta \quad \ldots (1)$$

A smaller angle $\alpha$ allows the object 2 to be illuminated with higher radiance. When the angle $\beta$ is set based on the angle $\theta$max, it is preferable that the condition $\beta > \alpha$ is satisfied. Thus, based on the conditional expression (1), it is preferable that the distances L1 and L2 satisfy the following conditional expression (2).

$$L1 > L2 \quad \ldots (2)$$

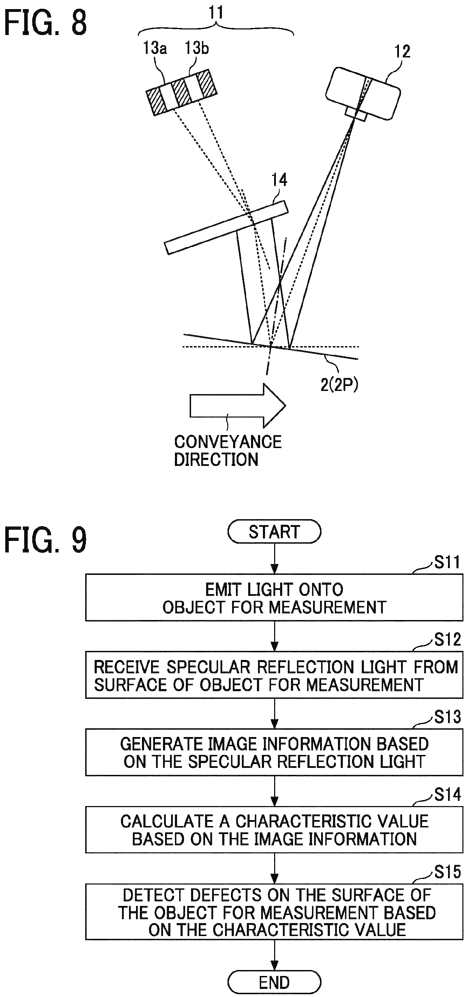

FIG. 8 is a plan view of an optical arrangement of a measuring apparatus 1. In FIG. 8, like reference signs are applied to components identical or corresponding to components illustrated in FIGS. 7A and 7B, redundant description is omitted. Unlike the case of FIG. 7, two light sources 13a and 13b are used.

As illustrated in FIG. 8, the light source 13b has a smaller angle of incidence with respect to the diffuser plate 14 than the light source 13a. Thus, the object 2 can be illuminated with greater radiance by the light source 13b than by the light source 13a. Two light sources 13 enable more accurate measurement.

Measuring Method

FIG. 9 is a flowchart for explaining a measuring method.

The measurement method is executed in the measuring apparatus 1.

First, in step S11, an illuminator 11 of the measuring apparatus 1 emits light onto an object 2 for measurement.

Subsequently, in step S12, a light receiver 12 of the measuring apparatus 1 receives light specularly reflected from the object 2 to which the illuminator 11 emits light.

Then, in step S13, the defect detection unit 24 generates image information based on the light specularly reflected from the object 2 and received by the light receiver 12. When multiple light receiver 12 are used, image information from multiple regions of the object 2 may be obtained.

In step S14, the defect detection unit 24 calculates a characteristic value based on the generated image information.

Subsequently, in step S15, the defect detection unit 24 detects a defect of the surface of the object 2 according to the calculated characteristic value. Additionally, step S15 can also include can also include outputting a corrective action to correct the defect on the object 2 (e.g., a correction step, such as repainting the object 2 and/or repairing the defect on/in the object 2). Repairing can involve any known paint repair technique, such as wet sanding, polishing, removing the defective paint and/or applying an additional layer of paint/clearcoat, and the like).

The defect detection unit 24 further generates image information based on the reflection light received by the light receiver 12; calculates a characteristic value of the surface based on the image information; detects the defect on the surface of the object according to the characteristic value; and outputs a corrective action to be performed on the object to correct the defect.

A measuring method includes emitting light (in step S11), by a light source 13, onto an object for measurement conveyed in a conveyance direction; and receiving reflection light specularly reflected from a surface of the object (in step S12). The light is emitted from the light source 13 through a diffuser plate 14 and then onto the object 12, and from the surface of the object to a light receiver 12.

The measuring method further includes detecting (in step S15) a defect on the surface of the object based on the reflection light.

The measuring method further includes generating (in step S13) image information based on the reflection light received by the light receiver (in step 12); calculating (in step S14) a characteristic value of the surface based on the image information; detecting (in step S15) a defect on the surface of the object according to the characteristic value; and outputting (in step S15) a corrective action to be performed on the object to correct the defect.

The measuring method involves the above-described steps. However, the measuring method may involve an additional step depending on factors such as the measurement conditions and environments.

Advantageous Effects

In a measurement apparatus 1 according to one or more embodiments, a diffuser plate 14 diffuses a light beam in an array direction F of a light source 13 and is positioned between the light source 13 and an object for measurement. This arrangement of the diffuser plate 14 makes it easier for the light receiver 12 to receive the light specularly reflected from the object 2, regardless of the tilting of the surface 2P. This arrangement enables a reduction in the number of light sources 13 and allows the measurement of the object 2 even when the width of the light source in the array direction is reduced. Thus, the number of light sources 13 used to emit light to the object 2 can be reduced.

The embodiments have been described above; however, the present disclosure is not limited to the above-described embodiments and can be modified and improved in various ways within the scope of the disclosure.

Aspects of the present disclosure are as follows.

Aspect 1

A measuring apparatus (e.g., 1) includes an illuminator (e.g., 11) and a light receiver (e.g., 12). The illuminator (e.g., 11) includes a light source (e.g., 13) to emit a light beam to an object conveyed in a conveyance direction; and a diffuser plate (e.g., 14) to diffuse the light beam emitted from the light source (e.g., 13) to illuminate a surface of the object with a diffused light beam. The light receiver (e.g., 12) receives reflection light specularly reflected from the surface of the object illuminated by the illuminator (e.g., 11). A conditional expression below is satisfied:

$$L1 > L2$$

where

L1 denotes a distance between the light source (e.g., 13) and the diffuser plate (e.g., 14), and
L2 denotes a distance between the diffuser plate (e.g., 14) and the surface of the object.

Aspect 2

In the measuring apparatus (e.g., 1) according to Aspect 1, the diffuser plate (e.g., 14) is disposed between the light source (e.g., 13) and the object.

Aspect 3

In the measuring apparatus (e.g., 1) according to Aspect 1 or 2, a conditional expression below is satisfied:

$$B \geq 2\theta max$$

where

B denotes a diffusion angle at the diffuser plate (e.g., 14) in a plane parallel to the conveyance direction, and
$\theta max$ denotes a maximum value of an angle between the conveyance direction and the surface (e.g., 2P) of the object.

Aspect 4

The measuring apparatus (e.g., 1) according to any one of Aspects 1 to 3, further includes a defect detection unit (e.g., 24) that detects a defect on the surface of the object based on the reflection light received by the light receiver (e.g., 12).

Aspect 5

In the measuring apparatus (e.g., 1) according to Aspect 4, the defect detection unit (e.g., 24) further generates image information based on the reflection light received by the light receiver (e.g., 12); calculates a characteristic value of the surface based on the image information; detects the defect on the surface of the object according to the characteristic value; and outputs a corrective action to be performed on the object to correct the defect.

Aspect 6

The measuring apparatus (e.g., 1) according to any one of Aspects 1 to 5, further includes multiple light sources including the light source (e.g., 13).

Aspect 7

In the measuring apparatus (e.g., 1) according to any one of Aspects 1 to 6, the light source (e.g., 13) includes multiple light emitting diodes.

Aspect 8

A measuring method includes emitting light (S11), by a light source, onto an object for measurement conveyed in a conveyance direction; and receiving reflection light specularly reflected from a surface of the object (S12). The light is emitted from the light source through a diffuser plate and then onto the object, and from the surface of the object to a light receiver.

Aspect 9

The measuring method according to Aspect 8, further includes detecting (S15) a defect on the surface of the object based on the reflection light.

Aspect 10

The measuring method according to Aspect 8 or 9, further includes generating (S13) image information based on the reflection light received by the light receiver (12); calculating (S14) a characteristic value of the surface based on the image information; detecting (S 15) a defect on the surface of the object according to the characteristic value; and outputting (S15) a corrective action to be performed on the object to correct the defect.
The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.
Any one of the above-described operations may be performed in various other ways, for example, in an order different from the one described above.
The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

**Claims**

1. A measuring apparatus (1) comprising:

   an illuminator (11) including:

      a light source (13) to emit a light beam to an object conveyed in a conveyance direction; and
      a diffuser plate (14) to diffuse the light beam emitted from the light source (13) to illuminate a surface of the object with a diffused light beam; and

   a light receiver to receive reflection light specularly reflected from the surface of the object illuminated by the illuminator (11), wherein a conditional expression below is satisfied:

$$L1 > L2$$

   where

      L1 denotes a distance between the light source (13) and the diffuser plate (14), and L2 denotes a distance between the diffuser plate (14) and the surface of the object.

2. The measuring apparatus (1) according to claim 1, wherein
   the diffuser plate (14) is disposed between the light source (13) and the object.

3. The measuring apparatus (1) according to claim 1 or 2, wherein a conditional expression below is satisfied:

$$B \geq 2\theta max$$

   where

      B denotes a diffusion angle at the diffuser plate (14) in a plane parallel to the conveyance direction, and
θmax denotes a maximum value of an angle between the conveyance direction and the surface (2P) of the object.

4. The measuring apparatus (1) according to any one of claims 1 to 3, further comprising a defect detection unit (24) configured to detect a defect on the surface of the object based on the reflection light received by the light receiver (12).

5. The measuring apparatus (1) according to claim 4, wherein
   the defect detection unit (24) is further configured to:

      generate image information based on the reflection light received by the light receiver (12);
      calculate a characteristic value of the surface based on the image information;
      detect the defect on the surface of the object according to the characteristic value; and
      output a corrective action to be performed on the object to correct the defect.

6. The measuring apparatus according to any one of claims 1 to 5, further comprising multiple light sources including the light source (13).

7. The measuring apparatus (1) according to any one of claims 1 to 6, wherein the light source (13) includes multiple light emitting diodes.

8. A measuring method comprising:

      emitting light (S11), by a light source, onto an object for measurement conveyed in a conveyance direction; and
      receiving reflection light specularly reflected from a surface of the object (S12),
      wherein the light is emitted from the light source through a diffuser plate and then onto the object, and from the surface of the object to a light receiver.

9. The measuring method according to claim 8, further comprising:
   detecting (S15) a defect on the surface of the object based on the reflection light.

10. The measuring method according to claim 8 or 9, further comprising:

      generating (S13) image information based on the reflection light received by the light receiver (12);
      calculating (S14) a characteristic value of the surface based on the image information;
      detecting (S15) a defect on the surface of the object according to the characteristic value; and outputting (S15) a corrective action to be performed on the object to correct the defect.

# FIG. 1

EP 4 610 633 A1

# FIG. 2

OPTICAL SECTION — 10

ILLUMINA-TOR — 11

LIGHT SOURCE — 13

LIGHT RECEIVER — 12

ILLUMINATION DIRECTION

OPTICAL-AXIS DIRECTION

2P

# FIG. 3

20

CPU — 101

ROM — 102

RAM — 103

109

HDD — 104

INPUT-OUTPUT I/F — 105

# FIG. 4

# FIG. 5A

CONVEYANCE DIRECTION

2(2P)

10

3

# FIG. 5B

10

2

2P    3

# FIG. 6A
## COMPARATIVE EXAMPLE

# FIG. 6B
## COMPARATIVE EXAMPLE

# FIG. 6C
## COMPARATIVE EXAMPLE

# FIG. 7A

CONVEYANCE
DIRECTION

# FIG. 7B

FIG. 8

CONVEYANCE
DIRECTION

FIG. 9

START

EMIT LIGHT ONTO
OBJECT FOR MEASUREMENT
— S11

RECEIVE SPECULAR REFLECTION LIGHT FROM
SURFACE OF OBJECT FOR MEASUREMENT
— S12

GENERATE IMAGE INFORMATION BASED
ON THE SPECULAR REFLECTION LIGHT
— S13

CALCULATE A CHARACTERISTIC VALUE
BASED ON THE IMAGE INFORMATION
— S14

DETECT DEFECTS ON THE SURFACE OF
THE OBJECT FOR MEASUREMENT BASED
ON THE CHARACTERISTIC VALUE
— S15

END

Europäisches
Patentamt

European
Patent Office

Office européen
des brevets

## EUROPEAN SEARCH REPORT

**Application Number**

EP 25 15 8472

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/247895 A1 (ANDO MORITOSHI [JP] ET AL) 10 November 2005 (2005-11-10) | 1-4,8,9 | INV. G01N21/88 |
| Y | * paragraphs [0048] - [0074]; claim 9; figures 4, 5, 9, 10 * | 5-7,10 | G01N21/84 G01N21/95 |
| X | CA 2 051 032 A1 (HAJIME INDUSTRIES [JP]) 15 March 1992 (1992-03-15) | 1,2,4,8,9 | ADD. G01N21/94 |
| Y | * page 8, line 3; figure 1 * * page 7, paragraph 4 * | 5-7,10 | |
| X | JP 2015 125069 A (RICOH ELEMEX CORP) 6 July 2015 (2015-07-06) | 8-10 | |
| Y | * paragraph [0016]; claims 1,6; figure 1 * | 6,7 | |
| X | JP 6 264132 B2 (NISSAN MOTOR) 24 January 2018 (2018-01-24) | 8-10 | |
| Y | * paragraphs [0015], [0016], [0020] - [0027]; figures 1-4 * | 6,7 | |
| X | JP H06 129995 A (NIPPON STEEL CORP) 13 May 1994 (1994-05-13) * paragraphs [0025] - [0026]; figure 1 * | 1,2,4 | TECHNICAL FIELDS SEARCHED (IPC) |
| Y | JP H10 96615 A (NISSAN MOTOR) 14 April 1998 (1998-04-14) * paragraphs [0021], [0041] - [0051] * | 5,10 | G01N |

The present search report has been drawn up for all claims

| Place of search | Date of completion of the search | Examiner |
|---|---|---|
| Munich | 13 June 2025 | Duijs, Eric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 8472

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2025

| Patent document cited in search report | | Publication date | Patent family member(s) | | Publication date |
|---|---|---|---|---|---|
| US 2005247895 | A1 | 10-11-2005 | CN | 1696672 A | 16-11-2005 |
| | | | JP | 2005321319 A | 17-11-2005 |
| | | | KR | 20060046017 A | 17-05-2006 |
| | | | US | 2005247895 A1 | 10-11-2005 |
| CA 2051032 | A1 | 15-03-1992 | AU | 8380591 A | 19-03-1992 |
| | | | CA | 2051032 A1 | 15-03-1992 |
| | | | DE | 4130217 A1 | 19-03-1992 |
| | | | FR | 2666884 A1 | 20-03-1992 |
| | | | GB | 2249169 A | 29-04-1992 |
| | | | JP | H04122839 A | 23-04-1992 |
| JP 2015125069 | A | 06-07-2015 | NONE | | |
| JP 6264132 | B2 | 24-01-2018 | JP | 6264132 B2 | 24-01-2018 |
| | | | JP | 2015184143 A | 22-10-2015 |
| JP H06129995 | A | 13-05-1994 | NONE | | |
| JP H1096615 | A | 14-04-1998 | JP | 3211681 B2 | 25-09-2001 |
| | | | JP | H1096615 A | 14-04-1998 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021056182 A